# EUROPEAN PATENT SPECIFICATION

(11) **EP 2 534 841 B1**
(45) Date of publication and mention of the grant of the patent: **29.11.2017**
(21) Application number: 11771542.5
(22) Date of filing: 07.04.2011
(51) Int. Cl.: H04N 19/52

(54) **MOTION VECTOR PREDICTION METHOD**
VERFAHREN ZUR BEWEGUNGSVEKTORVORHERSAGE
PROCÉDÉ DE PRÉDICTION DE VECTEUR DE MOUVEMENT

(30) Priority: 01.12.2010 US 957644; 22.04.2010 US 326731 P
(43) Date of publication of application: 19.12.2012
(60) Divisional application: 17193728.7
(73) Proprietor: HFI Innovation Inc., Hsinchu County 302 (TW)
(72) Inventor: TSAI, Yu-Pao, Taiwan 830 (TW); FU, Chih-Ming, Taiwan 300 (TW); LIN, Jian-Liang, Taiwan 270 (TW); HUANG, Yu-Wen, Taiwan 104 (TW); LEI, Shaw-Min, Taiwan, 302 (TW)
(74) Representative: Hoefer & Partner Patentanwälte mbB
(86) International application number: PCT/CN2011/072500
(87) International publication number: WO 2011/131089

(56) References cited:
- EP-A2- 1 482 742
- CN-A- 1 523 896
- CN-A- 1 925 614
- JP-A- 2007 214 741
- US-A1- 2004 252 764
- US-A1- 2006 018 381
- US-A1- 2008 285 653
- YIN: "Unification of Motion Vector Prediction Methods", 5. JVT MEETING; 14-10-2002 - 18-10-2002; GENEVA, CH; (JOINT VIDEO TEAMOF ISO/IEC JTC1/SC29/WG11 AND ITU-T SG.16 ),, no. JVT-E061r1, 18 October 2002 (2002-10-18), XP030005478, ISSN: 0000-0432
- LAROCHE G ET AL: "RD Optimized Coding for Motion Vector Predictor Selection", IEEE TRANSACTIONS ON CIRCUITS AND SYSTEMS FOR VIDEO TECHNOLOGY, IEEE SERVICE CENTER, PISCATAWAY, NJ, US, vol. 18, no. 9, 1 September 2008 (2008-09-01), pages 1247-1257, XP011231739, ISSN: 1051-8215, DOI: 10.1109/TCSVT.2008.928882

## Description

### CROSS REFERENCE TO RELATED APPLICATIONS

This application claims the benefit of U.S. Provisional Application No. 61/295,810, filed on January 18, 2010, and U.S. Provisional Application No. 61/ 326,731, filed on April 22, 2010.

### TECHNICAL FIELD

The invention relates to video processing, and more particularly to motion prediction of video data. Specifically, the invention relates to a motion prediction method according to the pre-characterizing part of independent claim 1. Such a method is disclosed in EP 1 482 742 A2, in LAROCHE G ET AL: "RD Optimized Coding for Motion Vector Predictor Selection", IEEE TRANSACTIONS ON CIRCUITS AND SYSTEMS FOR VIDEO TECHNOLOGY, vol. 18, no. 9, 1 September 2008 (2008-09-01), pages 1247-1257, XP011231739, and in YIN: "Unification of Motion Vector Prediction Methods", no. JVT-E061r1, respectively.

### BACKGROUND

The new upcoming H.264 compression standard can provide good video quality at substantially lower bit rates than previous standards by adopting features such as sub-pixel accuracy and multiple-referencing. The video compression process can be generally divided into 5 parts which include: inter-prediction/intra-prediction, transform/inverse-transform, quantization/inverse-quantization, loop filter, and entropy encoding. H.264 is used in various applications such as Blu-ray Discs, DVB broadcasting services, direct-broadcast satellite television service, cable television services, and real-time videoconferencing.

A video datastream comprises a series of frames. Each frame is divided into a plurality of coding units (e.g. macroblocks or extended macroblocks) for video processing. Each coding unit can be segmented into quad-tree partitions, and a leaf coding unit is called a prediction unit. A prediction unit can be further segmented into quad-tree partitions, and each partition is assigned with a motion parameter. In order to reduce the cost of transmitting enormous amount of motion parameters, a motion vector predictor (MVP) is calculated for each partition by referencing to adjacent coded blocks, coding efficiency can thus be improved as the motion of the adjacent blocks tends to have high spatial correlation.

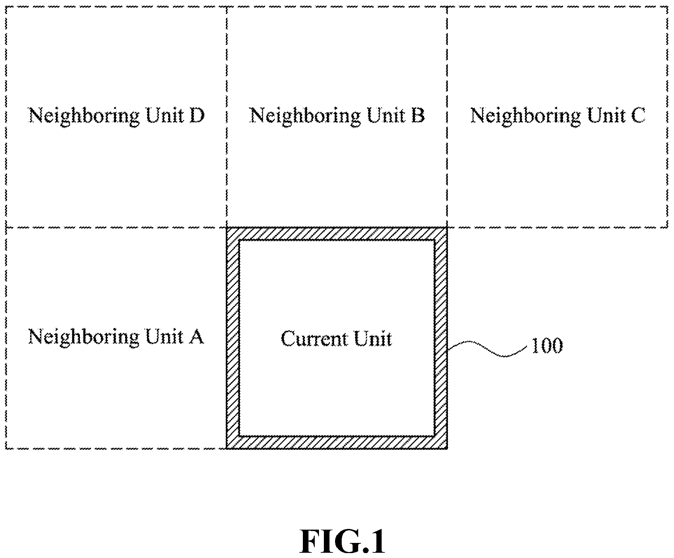

Referring to Fig. 1, a schematic diagram of a current unit 100 and a plurality of neighboring units A, B, C, and D are shown. In this example, both the current unit 100 and neighboring units A, B, C and D are the same size; however, these units are not necessary to be the same size. The motion vector predictor (MVP) of the current unit 100 is predicted according to the motion vectors of the neighboring units A, B, and C, or A, B, and D if C is unavailable. When the current unit 100 is a 16×16 block and a motion vector of the neighboring unit C exists, a medium of the motion vectors of the neighboring units A, B, and C is determined to be the MVP of the current unit 100. When the current unit 100 is a 16×16 block and a motion vector of the neighboring unit C does not exist, a medium of the motion vectors of the neighboring units A, B, and D is determined to be the MVP of the current unit 100. When the current unit 100 is an 8×16 partition in a left half of a 16×16 block, a motion vector of the neighboring unit A is determined to be the MVP of the current unit 100. When the current unit 100 is an 8×16 partition in a right half of a 16×16 block, a motion vector of the neighboring unit C is determined to be the MVP of the current unit 100. When the current unit 100 is a 16×8 partition in an upper half of a 16×16 block, a motion vector of the neighboring unit B is determined to be the MVP of the current unit 100. When the current unit 100 is a 16×8 partition in a lower half of a 16×16 block, a motion vector of the neighboring unit A is determined to be the MVP of the current unit 100.

When an MVP of a current unit is predicted according to the motion vectors of the neighboring units A, B, C, and D, the motion vectors of the neighboring units A, B, C, and D are not properly temporal scaled. For example, the reference frame of the neighboring units A, B, and C are different, and the motion vectors of the neighboring units A, B, and C correspond to the reference frames respectively. The temporal distances between each of the reference frames and the current frame are different. The motion vectors of the neighboring units A, B, and C should therefore be temporal scaled according to the temporal distances before predicting the MVP of the current unit 100 according to the motion vectors of the neighboring units A, B, and C.

The MVP of the current unit 100 is only predicted according to the motion vectors of the neighboring units A, B, C, and D. The prediction accuracy of MVP may be further improved if more candidate MVPs are considered and the best out of the candidate MVPs is selected by rate-distortion optimization. For example, motion vector competition (MVC) is proposed to select the best MVP from a predefined candidate set specified in sequence level. The predefined candidate set may include the H.264 standard predictor (e.g. the median MV of neighboring units), MV of the collocated unit at the same location in a reference frame as that of the current unit, and MVs of the neighboring units. The recommended number of MVPs in the predefined candidate set is two. The predefined candidate set, according to the motion vector competition method, is fixed in a video sequence level.

### SUMMARY

The invention provides a motion prediction method according to the appended set of claims. A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:
Fig. 1 is a schematic diagram of a current coding unit and a plurality of neighboring coding units;
Fig. 2 is a block diagram of a video encoder according to the invention;
Fig. 3 is a schematic diagram of scaling of a motion vector of two candidate units;
Fig. 4 is a flowchart of a motion prediction method with temporal difference adjustment;
Fig. 5 is a schematic diagram of a plurality of candidate units for motion prediction of a current unit according to an embodiment of the invention;
Figs. 6A and 6B illustrate a flowchart of a motion prediction method with adaptively chosen candidate units according to an embodiment of the invention; and
Fig. 7 is a schematic diagram of a table recording motion difference values corresponding to different coded units and candidate units according to an embodiment of the invention.

### DETAILED DESCRIPTION

The following description is of the best-contemplated mode of carrying out the invention. This description is made for the purpose of illustrating the general principles of the invention and should not be taken in a limiting sense. The scope of the invention is best determined by reference to the appended claims.

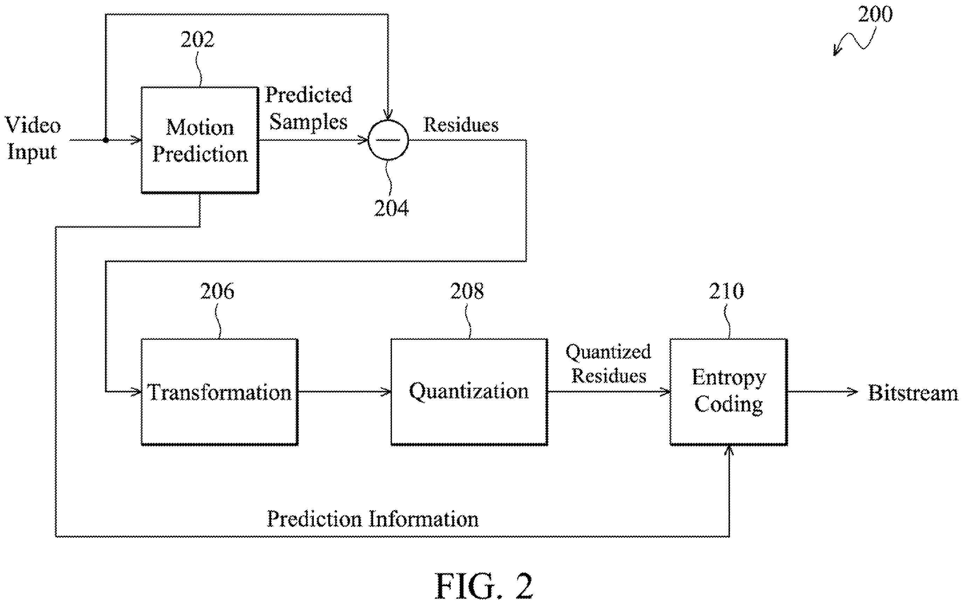

Referring to Fig. 2, a block diagram of a video encoder 200 is shown. In one embodiment, the video encoder 200 comprises a motion prediction module 202, a subtraction module 204, a transform module 206, a quantization module 208, and an entropy coding module 210. The video encoder 200 receives a video input and generates a bitstream as an output. The motion prediction module 202 performs motion prediction on the video input to generate predicted samples and prediction information. The subtraction module 204 then subtracts the predicted samples from the video input to obtain residues, thereby reducing video data amount from that of the video input to that of the residues. The residues are then sequentially sent to the transform module 206 and the quantization module 208. The transform module 206 performs a discrete cosine transform (DCT) on the residues to obtain transformed residues. The quantization module 208 then quantizes the transformed residues to obtain quantized residues. The entropy coding module 210 then performs entropy coding on the quantized residues and prediction information to obtain a bitstream as a video output.

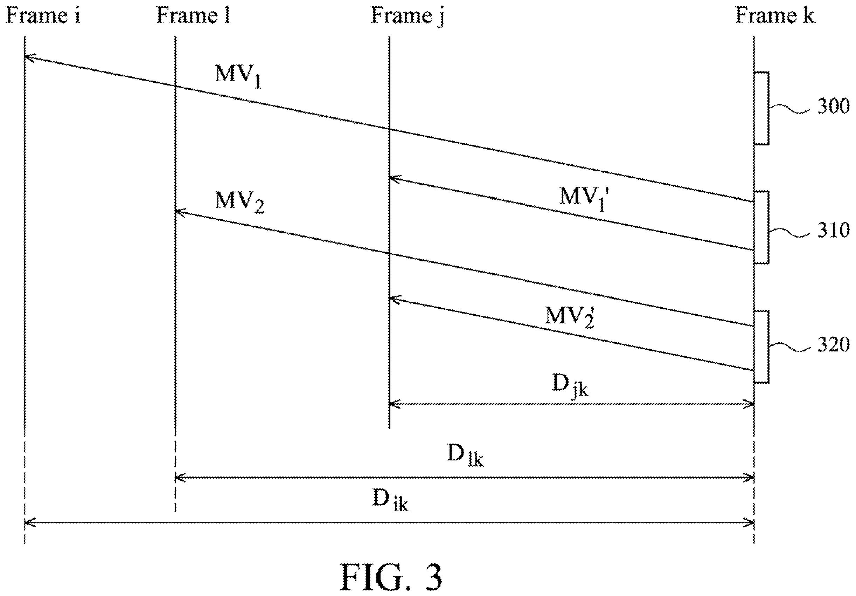

A motion prediction module 202 predicts a motion vector predictor (MVP) of a current unit of a current frame according to motion vectors of a plurality of candidate units. In one embodiment, the candidate units are neighboring units neighboring to the current unit. Before the motion prediction module 202 predicts the MVP of the current unit, temporal distances between reference frames of the candidate units and a current frame are calculated, and the motion vectors of the candidate units are scaled according to the temporal distances. Referring to Fig. 3, a schematic diagram of scaling of a motion vector of two candidate units 310 and 320 is shown. A current frame k comprises two candidate units 310 and 320 for motion prediction of a current unit 300. The first candidate unit 310 has a motion vector MV₁ in reference to a reference frame i, and a first temporal difference Dᵢₖ between the reference frame i and the current frame k is calculated. The second candidate unit 320 has a motion vector MV₂ in reference to a reference frame 1, and a second temporal difference Dₗₖ between the reference frame l and the current frame k is calculated.

A target temporal distance Dⱼₖ between a target searching frame j and the current frame k is then calculated. The target searching frame j is the selected reference frame. A first temporal scaling factor is then calculated by dividing the target temporal distance Dⱼₖ by the first temporal distance Dᵢₖ, and the motion vector MV₁ of the first candidate unit 310 is multiplied by the first temporal scaling factor (Dⱼₖ/Dᵢₖ) to obtain a scaled motion vector MV₁' corresponding to the first candidate unit 310. A second temporal scaling factor is then calculated by dividing the target temporal distance Dⱼₖ by the second temporal distance Dₗₖ, and the motion vector MV₂ of the second candidate unit 320 is multiplied by the second temporal scaling factor (Dⱼₖ/Dₗₖ) to obtain a scaled motion vector MV₂' corresponding to the second candidate unit 320. Thus, the scaled motion vectors MV₁' and MV₂' are both measured in reference to the target searching frame j, and the temporal distance difference factor is therefore removed from the scaled motion vectors MV₁' and MV₂'. The motion prediction module 202 can then predict the MVP of the current frame 300 according to the scaled motion vectors MV₁' and MV₂' of the candidate units 310 and 320.

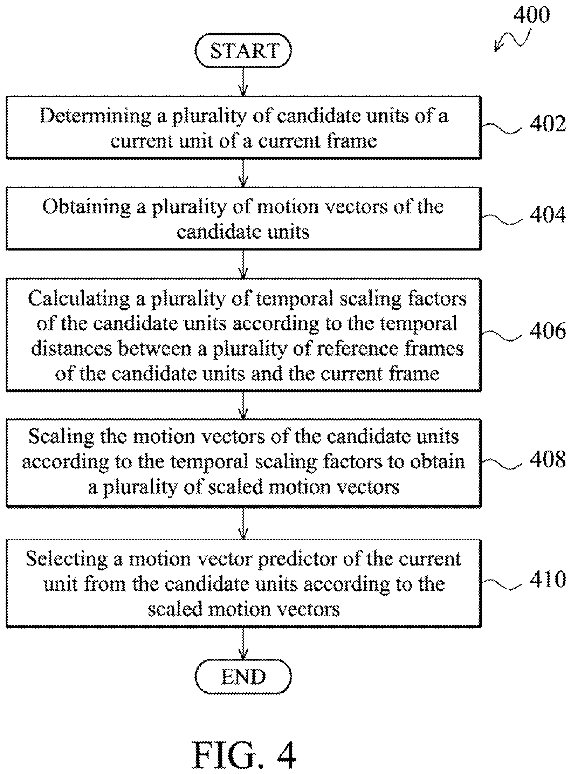

Referring to Fig. 4, a flowchart of a motion prediction method 400 with temporal difference adjustment is shown. First, a plurality of candidate units for motion prediction of a current unit of a current frame is determined (step 402). The candidate units and the current unit are blocks with same or different sizes, and each of these units can be a coding unit, a prediction unit, or a prediction unit partition. In one embodiment, the candidate units comprise a left unit A on the left side of the current unit, an upper unit B on an upper side of the current unit, an upper-right unit C in line with an upper-right direction of the current unit, and an upper-left unit D in line with an upper-left direction of the current unit. A plurality of motion vectors of the candidate units are then obtained (step 404). A plurality of temporal scaling factors of the candidate units is then calculated according to the temporal distances between reference frames of the candidate units and the current frame (step 406). In one embodiment, a plurality of temporal distances between the reference frames of the candidate units and the current frame is first calculated, a target temporal distance between a target searching frame and the current frame is also calculated, and the target temporal distance is then respectively divided by the temporal distances corresponding to the candidate units to obtain a plurality of temporal scaling factors corresponding to the candidate units, as shown in Fig. 3.

The motion vectors of the candidate units are then scaled according to the temporal scaling factors to obtain a plurality of scaled motion vectors (step 408). In one embodiment, the motion vectors of the candidate units are respectively multiplied by the temporal scaling factors of the candidate units to obtain the scaled motion vectors of the candidate units, as shown in Fig. 3. A motion vector predictor of the current unit is then selected from the candidate units according to the scaled motion vectors (step 410). In one embodiment, the scaled motion vectors are sorted, and a medium scaled motion vector is then selected from the scaled motion vectors as the MVP of the current unit.

When the motion prediction module 202 determines a MVP of a current unit according to a motion vector competition method, typically, only motion vectors of two candidate units determined in a sequence level are included in the candidate set for determining MVP of the current unit. In addition, the candidate set is not adaptively determined according to characteristics of the current unit. The performance of motion prediction may be improved if the candidate set is adaptively determined according to characteristics of the current unit.

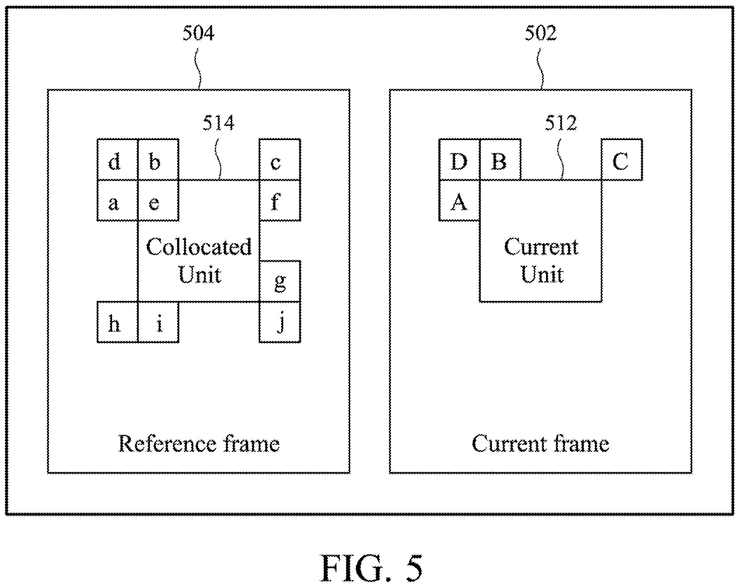

Referring to Fig. 5, a schematic diagram of a plurality of candidate units for motion prediction of a current unit 512 according to an embodiment of the invention is shown. In this embodiment, the current unit 512 and the candidate units are blocks with different sizes, for example, the current unit 512 is a 16x16 block and the candidate units are 4x4 blocks. In another embodiment, the size of current and candidate units can be the same or different, the size can be 4x4, 8x8, 8x16, 16x8, 16x16, 32x32, or 64x64. In this embodiment, motion vectors of four candidate units A, B, C, and D of the current frame 502 can be taken as candidates for determining the MVP of the current unit 512. In addition, a collocated unit 514 has the same location in a reference frame 504 as that of the current unit 512 in the current frame 502, and the motion vectors of a plurality of candidate units a∼j neighboring to the collocated unit 514 or within the collocated unit 514 can also be taken as candidates for determining the MVP of the current unit 512.

The candidate unit A in the current frame 502 is a partition on a left side of the current unit 512, the candidate unit B in the current frame 502 is a partition on an upper side of the current unit 512, the candidate unit C in the current frame 502 is a partition in line with an upper-right direction of the current unit 512, and the candidate unit D in the current frame 502 is a partition in line with an upper-left direction of the current unit 512. The candidate unit a in the reference frame 504 is a partition on a left side of the collocated unit 514, the candidate unit b in the reference frame 504 is a partition on an upper side of the collocated unit 514, the candidate unit c in the reference frame 504 is a partition in line with an upper-right direction of the collocated unit 514, and the candidate unit d in the reference frame 504 is a partition in line with an upper-left direction of the collocated unit 514. In addition, the candidate unit e in the reference frame 504 is a partition inside the collocated unit 514, the candidate units f and g in the reference frame 504 are partitions on a right side of the collocated unit 514, the candidate unit h in the reference frame 504 is a partition in line with a down-left direction of the collocated unit 514, the candidate unit i in the reference frame 504 is a partition on a downside of the collocated unit 514, and the candidate unit j in the reference frame 504 is a partition in line with a down-right direction of the collocated unit 514. In one embodiment, the candidate set for determining the MVP of the current unit 512 further comprises calculated motion vectors, for example, a motion vector equal to a medium of the motion vectors of the candidate units A, B, and C, a motion vector equal to a medium of the motion vectors of the candidate units A, B, and D, and a scaled MVP derived by a method similar to Fig. 4.

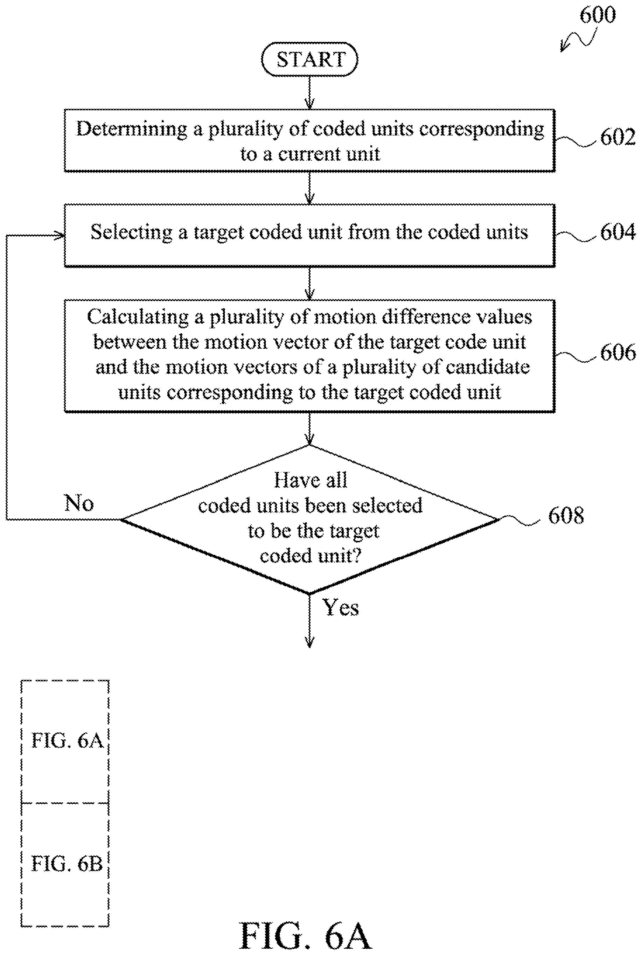

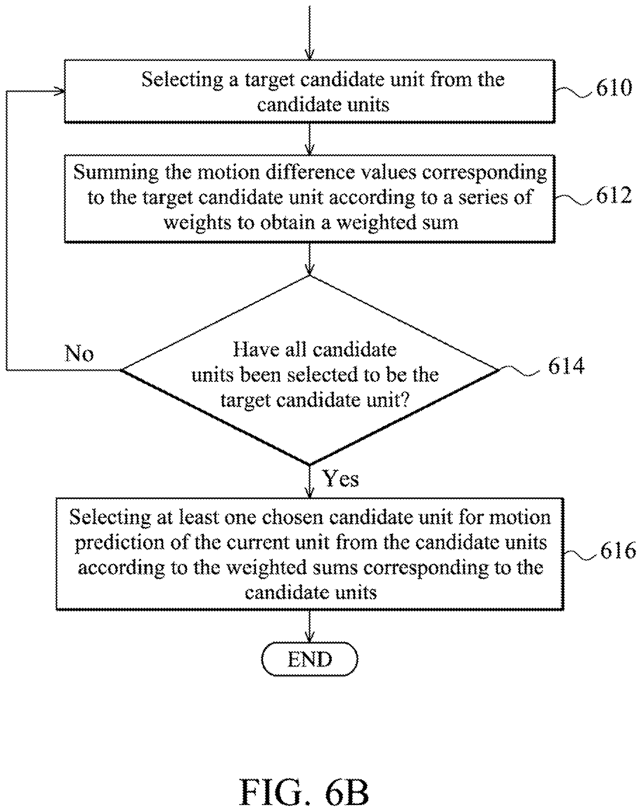

After a plurality of motion vectors corresponding to a current unit 512 is determined to be included in the candidate set, at least one motion vector is adaptively selected from the candidate set for motion prediction of the current unit 512. Referring to Fig. 6, a flowchart of a motion prediction method 600 with adaptively determination of a candidate set is shown. The candidate set for a current unit 512 is selected from a plurality of motion vectors corresponding to the current unit 512 (step 602). The motion vectors may comprise one or a combination of motion vectors of coded partitions/blocks in the same frame, calculated motion vectors, and motion vectors in the reference frame(s). In one embodiment, the candidate set corresponding to the current unit 512 shown in Fig. 5 comprises motion vectors of the units A, B, C, and D in the current frame 502 and a motion vector of the unit e in the reference frame 504. The candidate set may be determined according to one or more of the previous statistics, neighboring information, shape of the current unit, and position of the current unit. For example, the plurality of motion vectors corresponding to the current unit 512 is ranked according to neighboring information, and the first three motion vectors are selected to be included in the candidate set. A final MVP can be selected from the candidate set by the motion vector competition method or by some other selection methods.. In some embodiments, the plurality of motion vectors is ranked according to a selection order, and the selection order is determined by weighting sum of motion differences. The motion differences are calculated between each of the motion vector predictors and corresponding decoded motion vectors (i.e. real motion vectors) of the candidate units. The weights can be determined by the shape and position of the current unit, or the weights can be determined by the shape and position of the neighboring blocks.

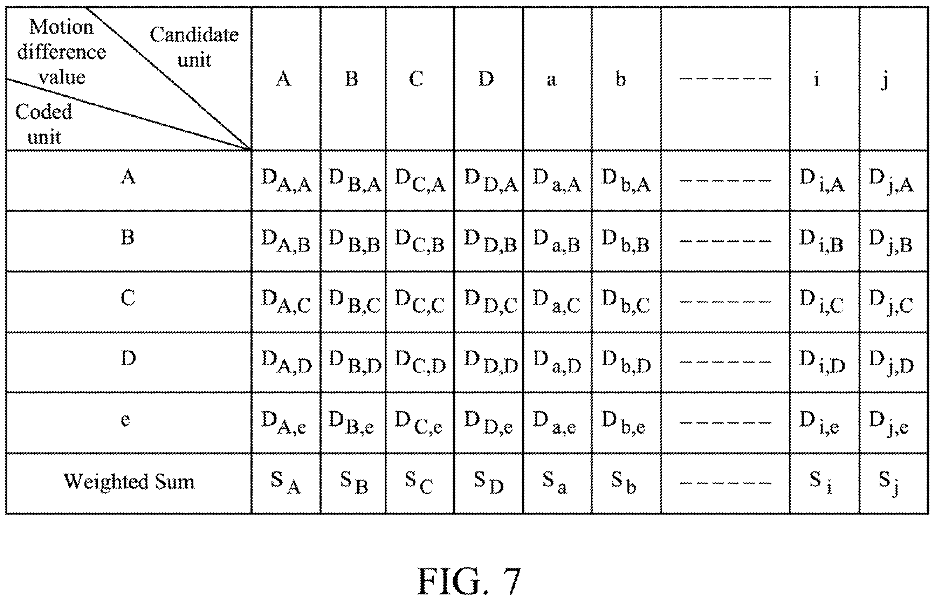

Referring to Fig. 7, a schematic diagram of a table recording motion difference values corresponding to different coded units and candidate units according to the invention are shown. For example, assume that the unit A is selected to be the target coded unit. A motion difference value D_{A,A} between the motion vectors of the unit A and a candidate unit A_{A} on a left side of the unit A is calculated. A motion difference value D_{B,A} between the motion vectors of the unit A and a candidate unit B_{A} on an upper side of the unit A is also calculated. A motion difference value D_{C,A} between the motion vectors of the unit A and a candidate unit C_{A} in line with an upper-right direction of the unit A is also calculated. A motion difference value D_{D,A} between the motion vectors of the unit A and a candidate unit D_{A} in line with an upper-left direction of the unit A is also calculated. A motion difference value D_{a,A} between the motion vectors of the unit A and a candidate unit a_{A} on a left side of a collocated unit corresponding to the unit A is also calculated. Similarly, the motion difference values D_{b,A}, ..., D_{j,A} corresponding to the coded unit A are also calculated.

The calculated motion difference values D_{A,A}, D_{B,A}, D_{C,A}, D_{D,A}, D_{a,A}, D_{b,A}, ..., D_{j,A} corresponding to the target coded unit A are then recorded in the table of Fig. 7. Another target coded unit B is then selected from the coded units (step 604), and the motion difference values D_{A,B}, D_{B,B}, D_{C,B}, D_{D,B}, D_{a,B}, D_{b,B}, ..., D_{j,B} corresponding to the target coded unit B are then calculated and recorded in the table of Fig. 7 (step 606). The steps 604 and 606 are repeated until the all coded units A, B, C, D, and e have been selected to be the target coded unit and the motion difference values corresponding to the coded units A, B, C, D, and e have been calculated (step 608).

After all motion differences corresponding to the coded units A, B, C, D, and e have been calculated, a selection order of the plurality of motion vectors are determined by weighting sum of the motion differences (step 610). For example, if the candidate unit A is selected as the target candidate unit, the motion difference values D_{A,A}, D_{A,B}, D_{A,C}, D_{A,D}, and D_{A,e} corresponding to the target candidate unit A are then summed according to a series of weights W_{A}, W_{B}, W_{C}, W_{D}, and Wₑ to obtain a weighted sum S_{A} = [(D_{A,A}×W_{A})+(D_{A,B}×W_{B})+ (D_{A,C}×W_{C})+ (D_{A,D}×W_{D})+ (D_{A,e}×Wₑ)] corresponding to the target candidate unit A, wherein the weights WA, W_{B}, W_{C}, W_{D}, and Wₑ respectively correspond to one of the coded units A, B, C, D, and e. The other candidate units B, C, D, e, ...., i, and j are then sequentially selected to be the target candidate unit, and the weighted sums S_{B}, S_{C}, S_{D}, Sₑ, ..., Sᵢ, and Sⱼ corresponding to the candidate units B, C, D, e, ...., i, and j are then sequentially calculated (steps 610 and 612).

When all candidate units have been selected to be the target candidate unit and the weighted sums S_{A}, S_{B}, S_{C}, S_{D}, Sₑ, ..., Sᵢ, and Sⱼ corresponding to all the candidate units A, B, C, D, e, ...., i, and j have been calculated (step 614), at least one chosen candidate unit for motion prediction of the current unit is selected from the candidate units A, B, C, D, e, ...., i, and j according to the weighted sums S_{A}, S_{B9} S_{C}, S_{D}, Sₑ, ..., Sᵢ, and Sⱼ corresponding to the candidate units A, B, C, D, e, ...., i, and j (step 616). In one embodiment, the weighted sums S_{A}, S_{B}, S_{C}, S_{D}, Sₑ, ..., Sᵢ, and Sⱼ are sorted according to the sizes thereof, and the candidate unit corresponding to the smallest weighted sum is determined to be the chosen candidate unit. Finally, a motion vector of the current unit 512 is predicted according to the motion vector of the chosen candidate unit.

While the invention has been described by way of example and in terms of preferred embodiment, it is to be understood that the invention is not limited thereto. To the contrary, it is intended to cover various modifications and similar arrangements (as would be apparent to those skilled in the art).

## Claims

1. A motion prediction method, comprising:
determining a plurality of candidate units corresponding to a current unit of a current frame, wherein the candidate units comprise at least a neighboring unit of the current unit in the current frame and at least a collocated unit of the current unit;
obtaining a plurality of motion vectors of the candidate units;
calculating a plurality of temporal scaling factors of the candidate units according to a plurality of respective temporal distances between respective reference frames of the motion vectors and the current frame;
scaling the motion vectors of the candidate units according to the temporal scaling factors to obtain a plurality of scaled motion vectors; **characterized by**
calculating a plurality of motion difference values between the scaled motion vectors of the candidate units and previously decoded motion vectors of a plurality of coded units corresponding to the current unit,
summing the motion difference values corresponding to the candidate units according to a series of weights to obtain a plurality of weighted sums respectively corresponding to the candidate units
sorting the weighted sums and
selecting the candidate unit corresponding to the smallest weighted sum to be a chosen candidate unit.

2. The motion prediction method as claimed in claim 1, wherein the method further comprises:
predicting a motion vector of the current unit according to the motion vector of the motion vector predictor.

3. The motion prediction method as claimed in claim 1, wherein calculation of the temporal scaling factors comprises:
calculating the respective temporal distances between the reference frames of the motion vectors of the candidate units and the current frame;
calculating a target temporal distance between a target searching frame and the current frame; and
dividing the target temporal distance by each of the respective temporal distances to obtain the temporal scaling factors.

4. The motion prediction method as claimed in claim 3, wherein scaling of the motion vectors of the candidate units comprises:
respectively multiplying the motion vectors of the candidate units by the temporal scaling factors of the candidate units to obtain the scaled motion vectors of the candidate units.

5. The motion prediction method as claimed in claim 1, wherein the candidate units comprise a left unit on the left side of the current unit, an upper unit on an upper side of the current unit, an upper-right unit in line with an upper-right direction of the current unit, and an upper-left unit in line with an upper-left direction of the current unit.

6. The motion prediction method as claimed in claim 1, wherein the current unit and the candidate units are macro blocks or blocks.

## Patentansprüche

1. Verfahren zur Bewegungsprädiktion, umfassend:
Bestimmen einer Mehrzahl von Kandidateneinheiten korrespondierend zu einer aktuellen Einheit eines aktuellen Bildes, wobei die Kandidateneinheiten mindestens eine benachbarte Einheit der aktuellen Einheit in dem aktuellen Bild und mindestens eine in einem benachbarten Bild der aktuellen Einheit entsprechend angeordnete Einheit umfassen; und
Erhalten einer Mehrzahl von Bewegungsvektoren der Kandidateneinheiten;
Berechnen einer Mehrzahl von zeitlichen Skalierungsfaktoren der Kandidateneinheiten gemäß einer Mehrzahl von jeweiligen zeitlichen Abständen zwischen den jeweiligen Referenz-Bildern der Bewegungsvektoren und dem aktuellen Bild;
Skalieren der Bewegungsvektoren der Kandidateneinheiten gemäß den zeitlichen Skalierungsfaktoren, um eine Mehrzahl von skalierten Bewegungsvektoren zu erhalten; **gekennzeichnet durch**
Berechnen einer Mehrzahl von zu der aktuellen Einheit korrespondierenden Bewegungsdifferenzwerten zwischen den skalierten Bewegungsvektoren der Kandidateneinheiten und zuvor dekodierten Bewegungsvektoren einer Mehrzahl von codierten Einheiten,
Summieren der zu den Kandidateneinheiten korrespondierenden Bewegungsdifferenzwerte entsprechend einer Reihe von Gewichten, um eine Mehrzahl jeweils zu den Kandidateneinheiten korrespondierenden gewichtete Summen zu erhalten,
Sortieren der gewichteten Summen und
Auswählen der zu der kleinsten gewichteten Summe korrespondierende Kandidateneinheit, um ein ausgewählter Kandidat zu sein.

2. Verfahren zur Bewegungsprädiktion nach Anspruch 1, wobei das Verfahren weiter umfasst:
Vorhersagen eines Bewegungsvektors der aktuellen Einheit gemäß dem Bewegungsvektor des Bewegungsvektor-Prädiktors.

3. Verfahren zur Bewegungsprädiktion nach Anspruch 1, wobei die Berechnung der zeitlichen Skalierungsfaktoren umfasst:
Berechnen der jeweiligen zeitlichen Abstände zwischen den Referenz-Bildern der Bewegungsvektoren der Kandidateneinheiten und dem aktuellen Bild;
Berechnen eines zeitlichen Ziel-Abstandes zwischen einem Ziel-Suchbild und dem aktuellen Bild; und
Dividieren der zeitlichen Ziel-Abstandes durch jede der jeweiligen zeitlichen Distanzen, um die zeitlichen Skalierungsfaktoren zu erhalten.

4. Verfahren zur Bewegungsprädiktion nach Anspruch 3, wobei das Skalieren der Bewegungsvektoren der Kandidateneinheiten umfasst:
jeweiliges Multiplizieren der Bewegungsvektoren der Kandidateneinheiten mit den zeitlichen Skalierungsfaktoren der Kandidateneinheiten, um die skalierten Bewegungsvektoren der Kandidateneinheiten zu erhalten.

5. Verfahren zur Bewegungsprädiktion nach Anspruch 1, wobei die Kandidateneinheiten eine linke Einheit auf der linken Seite der aktuellen Einheit, eine obere Einheit auf einer oberen Seite der aktuellen Einheit, eine obere-rechte Einheit gemäß einer oberen-rechten Richtung der aktuellen Einheit und eine obere-linke Einheit gemäß einer oberen-linken Richtung der aktuellen Einheit umfassen.

6. Verfahren zur Bewegungsprädiktion nach Anspruch 1, wobei die aktuelle Einheit und die Kandidateneinheiten Makroblöcke oder Blöcke sind.

## Revendications

1. Procédé de prédiction de mouvement, comprenant :
la détermination d'une pluralité d'unités candidates correspondant à une unité actuelle d'une image actuelle, où les unités candidates comprennent au moins une unité voisine de l'unité actuelle dans l'image actuelle et au moins une unité colocalisée de l'unité actuelle ;
l'obtention d'une pluralité de vecteurs de mouvement des unités candidates ;
le calcul d'une pluralité de facteurs d'échelle temporels des unités candidates conformément à une pluralité de distances temporelles respectives entre des images de référence respectives des vecteurs de mouvement et l'image actuelle ;
la mise à l'échelle des vecteurs de mouvement des unités candidates conformément aux facteurs d'échelle temporels pour obtenir une pluralité de vecteurs de mouvement mis à l'échelle ; **caractérisé par**
le calcul d'une pluralité de valeurs de différence de mouvement entre les vecteurs de mouvement mis à l'échelle des unités candidates et des vecteurs de mouvement précédemment décodés d'une pluralité d'unités codées correspondant à l'unité actuelle,
la sommation des valeurs de différence de mouvement correspondant aux unités candidates conformément à une série de poids pour obtenir une pluralité de sommes pondérées correspondant respectivement aux unités candidates
le tri des sommes pondérées et
la sélection de l'unité candidate correspondant à la somme pondérée la plus petite pour être une unité candidate choisie.

2. Procédé de prédiction de mouvement tel que revendiqué dans la revendication 1, dans lequel le procédé comprend en outre :
la prédiction d'un vecteur de mouvement de l'unité actuelle conformément au vecteur de mouvement du prédicteur de vecteur de mouvement.

3. Procédé de prédiction de mouvement tel que revendiqué dans la revendication 1, dans lequel le calcul des facteurs d'échelle temporels comprend :
le calcul des distances temporelles respectives entre les images de référence des vecteurs de mouvement des unités candidates et l'image actuelle ;
le calcul d'une distance temporelle cible entre une image de recherche cible et l'image actuelle ; et
la division de la distance temporelle cible par chacune des distances temporelles respectives pour obtenir les facteurs d'échelle temporels.

4. Procédé de prédiction de mouvement tel que revendiqué dans la revendication 3, dans lequel la mise à l'échelle des vecteurs de mouvement des unités candidates comprend le fait :
de multiplier respectivement les vecteurs de mouvement des unités candidates par les facteurs d'échelle temporels des unités candidates pour obtenir les vecteurs de mouvement mis à l'échelle des unités candidates.

5. Procédé de prédiction de mouvement tel que revendiqué dans la revendication 1, dans lequel les unités candidates comprennent une unité gauche sur le côté gauche de l'unité actuelle, une unité supérieure sur un côté supérieur de l'unité actuelle, une unité supérieure-droite alignée avec une direction supérieure-droite de l'unité actuelle, et une unité supérieure-gauche alignée avec une direction supérieure-gauche de l'unité actuelle.

6. Procédé de prédiction de mouvement tel que revendiqué dans la revendication 1, dans lequel l'unité actuelle et les unités candidates sont des macro-blocs ou des blocs.
